# EUROPÄISCHE PATENTANMELDUNG

(11) **EP 1 203 613 A1**
(43) Veröffentlichungstag der Anmeldung: **08.05.2002**
(21) Anmeldenummer: 01125515.5
(22) Anmeldetag: 25.10.2001
(51) Int. Cl.: B01J 2/00, B05B 7/06

(54) **Mehrstoffdüse zum Zerstäuben einer Substanz**

(30) Priorität: 02.11.2000 DE 10054359
(71) Anmelder: Hüttlin GmbH, 79585 Steinen (DE)
(72) Erfinder: Gross, Martin, 79585 Steinen (DE)
(74) Vertreter: Weller, Wolfgang, Dr.

(57) **Zusammenfassung**

Die Erfindung betrifft eine Mehrstoffdüse (10) zum Zerstäuben einer Substanz, insbesondere für eine Vorrichtung zum Beschichten, Granulieren, Pelletieren oder Dragieren eines Gutes, mit einer ersten Düsenöffnung (28), die von einem ersten Versorgungskanal (26) zur Zuführung der Substanz gespeist wird, mit einer sich um die erste Düsenöffnung (28) herum erstreckenden zweiten Düsenöffnung, die von einem zweiten Versorgungskanal (30) zur Zuführung eines Gases gespeist wird, und mit einer sich um die zweite Düsenöffnung (42) herum erstreckenden dritten Düsenöffnung (38). Um den konstruktiven Aufwand zu vereinfachen, wird vorgeschlagen, daß die dritte Düsenöffnung (38) von dem zweiten Versorgungskanal (30) gespeist wird und daß die Mehrstoffdüse (10) Mittel (38) aufweist, die die Geschwindigkeit des aus der dritten Düsenöffnung (38) austretendes Gases gegenüber der Geschwindigkeit des aus der zweiten Düsenöffnung (42) austretenden Gases verringern (Fig. 1).

## Beschreibung

Die Erfindung betrifft eine Mehrstoffdüse zum Zerstäuben einer Substanz, insbesondere für eine Vorrichtung zum Beschichten, Granulieren, Pelletieren oder Dragieren eines Gutes, mit einer ersten Düsenöffnung, die von einem ersten Versorgungskanal zur Zuführung der Substanz gespeist wird, mit einer sich um die erste Düsenöffnung herum erstreckenden zweiten Düsenöffnung, die von einem zweiten Versorgungskanal zur Zuführung eines Gases gespeist wird, und mit einer sich um die zweite Düsenöffnung herum erstreckenden dritten Düsenöffnung.

Eine derartige Mehrstoffdüse ist aus der DE 38 06 537 C2 bekannt.

Vorrichtungen zum Beschichten, Granulieren, Pelletieren oder Dragieren werden z.B. in der pharmazeutischen Industrie verwendet, um als Pellets bezeichnete ausgerundete Granula mit einer Lackschicht zu überziehen. Generell weisen bekannte Vorrichtungen dieser Art eine Prozeßkammer auf, in der ein eingebrachtes Gut über längere Zeit umgewälzt werden kann, z.B. durch Aufbau eines Fließ- oder Wirbelbetts. In einer Wandung der Prozeßkammer sind eine Vielzahl von Mehrstoffdüsen angeordnet, mit denen sich eine feste oder flüssige Substanz in den Umwälzbereich einsprühen läßt. Bei dieser Substanz kann es sich beispielsweise um einen Lack oder um eine Art Klebstoff handelt, der eine Agglomeration eines in die Prozeßkammer eingebrachten Stoffes bewirkt. Eine spezielle Ausführung einer derartigen Vorrichtung ist in der EP 172 530 A2 beschrieben.

Aus der eingangs genannten DE 38 06 537 C2 ist eine zur Verwendung in einer derartigen Vorrichtung bestimmte Mehrstoffdüse bekannt, die drei Versorgungskanäle aufweist, deren Mündungen jeweils eine Düsenöffnung bilden. Über eine erste kreisrunde Düsenöffnung am Ende eines ersten Versorgungskanals wird die gewünschte Substanz in die Prozeßkammer abgegeben. Um diese kreisförmige erste Düsenöffnung herum ist eine zweite ringförmige Düsenöffnung angeordnet, die sich am Ende eines zweiten Versorgungskanal befindet. Beim Betrieb der Mehrstoffdüse tritt durch diese zweite Düsenöffnung Zerstäuberluft mit einem Druck von mehreren bar aus, die ein Zerstäuben der aus der ersten Düsenöffnung austretenden Substanz bewirkt. Schließlich ist um die zweite ringförmige Düsenöffnung herum noch eine dritte ringförmige Düsenöffnung angeordnet, in die ein dritter Versorgungskanal mündet. Durch diesen dritten Versorgungskanal wird ebenfalls Luft zugeführt, doch steht diese unter einem geringeren Druck als die im zweiten Versorgungskanal zugeführte Luft. Aufgrund des geringeren Druckes tritt diese Luft mit vergleichsweise geringer Geschwindigkeit aus der dritten Düsenöffnung aus und bildet dabei eine Art Mantelströmung, die sich rings um den durch die Zerstäubung entstandenen Substanznebel anlegt. Dadurch werden unerwünschte Migrationsbewegungen von Partikeln der versprühten Substanz zur ersten und zweiten Düsenöffnung hin weitgehend oder ganz verhindert. Folglich können sich dort praktisch keine Ablagerungen bilden, so daß eine Reinigung der Düsenmündungen nur noch selten erforderlich ist.

Nachteilig bei dieser bekannten Mehrstoffdüse ist allerdings, daß die Mehrstoffdüse aufgrund der drei separaten Versorgungskanäle, die in konzentrisch zueinander angeordneten Düsenöffnungen münden, konstruktiv relativ aufwendig ist. Hinzu kommt, daß für die Vielzahl der erforderlichen Mehrstoffdüsen ein Versorgungssystem in der die Mehrstoffdüsen aufnehmenden Vorrichtung installiert sein muß, das eine unabhängige Versorgung jeder Mehrstoffdüse mit der einzusprühenden Substanz, mit der Zerstäuberluft hohen Drucks und mit der für die Mantelströmung benötigten Luft niedrigeren Drucks ermöglicht. Ein solches Versorgungssystem mit drei Versorgungsebenen ist ebenfalls konstruktiv relativ aufwendig.

Es ist daher Aufgabe der Erfindung, eine Mehrstoffdüse der eingangs genannten Art derart zu verbessern, daß der konstruktive Aufwand bei der Mehrstoffdüse selbst und dem für mehrere Mehrstoffdüsen erforderlichen Versorgungssystem verringert wird.

Bei einer Mehrstoffdüse der eingangs genannten Art wird diese Aufgabe dadurch gelöst, daß die dritte Düsenöffnung von dem zweiten Versorgungskanal gespeist wird und daß die Mehrstoffdüse Mittel aufweist, die die Geschwindigkeit des aus der dritten Düsenöffnung austretendes Gases gegenüber der Geschwindigkeit des aus der zweiten Düsenöffnung austretenden Gases verringern.

Die dritte Düsenöffnung wird somit nicht über einen eigenen dritten Versorgungskanal mit Gas niedrigeren Druckes zum Aufbau der Mantelströmung versorgt, sondern entnimmt dieses Gas dem ohnehin vorhandenen zweiten Versorgungskanal, der unter höherem Druck stehendes Gas führt. Aufgrund der zusätzlichen Mittel zur Verringerung der Austrittsgeschwindigkeit tritt aber das Gas aus der dritten Düsenöffnung trotz des nun höheren Gasdrucks mit einer geringeren Geschwindigkeit als aus der zweiten Düsenöffnung aus, so daß sich weiterhin die gewünschte Mantelströmung ausbilden kann. Die Mehrstoffdüse benötigt also trotz dreier unterschiedlicher Düsenöffnungen nur zwei Versorgungskanäle, was einen wesentlich einfacheren und kostengünstigeren Aufbau erlaubt. Dementsprechend sind auch für das Versorgungssystem lediglich zwei statt drei Versorgungsebenen erforderlich, wodurch sich auch dort erhebliche konstruktive Vereinfachungen ergeben. Die erfindungsgemäße Mehrstoffdüse vermag somit Ablagerungen im Mündungsbereich zu verhindern und ist dennoch konstruktiv nur unwesentlich aufwendiger als herkömmliche Zweistoffdüsen mit nur zwei Düsenöffnungen.

Der erste und der zweite Versorgungskanal können eine in weiten Grenzen beliebige Form aufweisen und müssen lediglich derart zueinander angeordnet sein, daß sich die erste, die zweite und die dritte Düsenöffnung im wesentlichen umeinander herum erstrecken. Im einfachsten Fall ist die erste Düsenöffnung kreisförmig und die zweite sowie die dritte Düsenöffnung ringförmig.

Selbstverständlich kann die erste Düsenöffnung auch die Form eines Rechtecks, eines Ovals oder eines Schlitzes aufweisen. Außerdem müssen die zweite und die dritte Düsenöffnung die jeweils innenliegende Düsenöffnung nicht vollständig umfassen; es genügt vielmehr, wenn die jeweils innenliegende Düsenöffnung so weit eingeschlossen ist, daß sich eine homogene Zerstäubung bzw. ein die Düsenmündung umgebendes Gaspolster erreichen läßt. Außerdem ist es möglich, daß jede der drei Düsenöffnungen durch eine Anordnung mehrerer kleinerer Einzelöffnungen ersetzt wird.

Bei einer bevorzugten Ausgestaltung sind die Mittel zur Verringerung der Geschwindigkeit als ein die zweite Düsenöffnung umgebendes mechanisches Strömungshindernis ausgeführt.

Ein solches mechanisches Strömungshindernis hat den Vorteil, daß dadurch praktisch keine Partikel durch die dritte Düsenöffnung hindurch in die Mehrstoffdüse gelangen können. Es hat sich nämlich gezeigt, daß dann, wenn die Vorrichtung nach der eingangs genannten DE 38 06 537 C2 abgeschaltet wird, sich absetzende Partikel durch die ringförmige dritte Düsenöffnung gelangen und tief in die Mehrstoffdüse eindringen können. Die Reinigung der Mehrstoffdüse gestaltet sich dann besonders aufwendig. Durch die anderen beiden Düsenöffnungen treten hingegen nur selten Partikel ein, da diese Düsenöffnungen meist kleiner sind als die dritte Düsenöffnung. Dadurch, daß bei dieser bevorzugten Ausgestaltung das mechanische Strömungshindernis die dritte Düsenöffnung mehr oder weniger weitgehend für Partikel verschließt, können diese nicht mehr durch die dritte Düsenöffnung in die Mehrstoffdüse eindringen.

In einer bevorzugten Weiterbildung dieser Ausgestaltung ist der zweite Versorgungskanal durch eine Kappe abgeschlossen, in der die zweite Düsenöffnung ausgespart ist und die das die dritte Düsenöffnung bildende mechanische Strömungshindernis trägt.

Diese Maßnahme hat den Vorteil, daß durch ein Bauelement sowohl die zweite als auch die dritte Düsenöffnung gebildet wird. Dies trägt weiter zur Vereinfachung des konstruktiven Aufwandes der Düsenkonstruktion bei.

In anderer zusätzlicher Weiterbildung ist die Kappe lösbar, insbesondere aufschraubbar, auf der Hülse befestigt.

Auf diese Weise läßt sich die Kappe zerstörungsfrei gegen eine andere Kappe austauschen. Dies ist nicht nur dann von Vorteil, falls die Kappe beschädigt sein sollte. Vielmehr ist es dadurch auch möglich, die Eigenschaften der Mehrstoffdüse durch Auswahl einer entsprechenden Kappe an die jeweils gestellten Anforderungen anzupassen. Je nach Art des verwendeten mechanischen Strömungshindernisses und der Größe sowie Anordnung der darin vorgesehenen zweiten Düsenöffnung verändern sich nämlich die Geschwindigkeit und die Richtung der durch die Kappe hindurchtretenden Gasströme. Es ist sogar möglich, eine Kappe mit einem mechanischen Strömungshindernis zu verwenden, das vollkommen gasundurchlässig ist. Auf diese Weise läßt sich eine einzelne Düse sehr einfach in eine Zweistoffdüse umwandeln.

Das mechanische Strömungshindernis läßt sich beispielsweise durch ein in der Düsenöffnung angeordnetes feines Gitter realisieren, welches eine Verringerung der Austrittsgeschwindigkeit bewirkt.

Bei einer besonders bevorzugten Ausgestaltung der Erfindung besteht das mechanische Strömungshindernis aus einem porösen gasdurchlässigen Material.

Dadurch läßt sich auf besonders einfache Weise die Austrittsgeschwindigkeit des über den zweiten Versorgungskanal zugeführten und aus der dritten Düsenöffnung austretenden Gases verringern.

Bei einer weiteren Ausgestaltung der Mehrstoffdüse ist der erste Versorgungskanal als ein konzentrisch in einer Hülse angeordnetes Rohr ausgeführt, dessen eines Ende die erste Düsenöffnung bildet, und der zweite Versorgungskanal wird durch einen Zwischenraum gebildet, der zwischen der Hülse und dem Rohr verbleibt.

Diese Ausgestaltung hat den Vorteil, daß sich auf besonders einfache Weise zwei konzentrisch zueinander angeordnete Versorgungskanäle bilden lassen. Am Ende der Hülse sind dann noch ein oder mehrere weitere Bauteile anzuordnen, in denen die zweite und die dritte Düsenöffnung ausgebildet sind.

Bei einer anderen bevorzugten Ausgestaltung der Erfindung sind die Mittel zur Verringerung der Geschwindigkeit durch einen an die dritte Düsenöffnung angrenzenden Kanalabschnitt gebildet, dessen Strömungsquerschnitt sich zur dritten Düsenöffnung hin vergrößert.

Aufgrund des sich zur dritten Düsenöffnung hin vergrößernden Strömungsquerschnitts verringert sich die Austrittsgeschwindigkeit des durch die dritte Düsenöffnung austretenden Gases. Somit läßt sich allein durch die Gestalt des sich an die dritte Düsenöffnung angrenzenden Kanalabschnitts die Austrittsgeschwindigkeit reduzieren, ohne daß hierfür zusätzliche Bauteile erforderlich sind.

Bei einer bevorzugten Weiterbildung der beiden letztgenannten Ausgestaltungen wird der Kanalabschnitt durch die Hülse und einem in dem Zwischenraum angeordneten Ablenkkörper gebildet, der die zweite Düsenöffnung von der dritten Düsenöffnung trennt. Dies ermöglicht eine konstruktiv sehr einfache Realisierung zweier unabhängiger Düsenöffnungen, da lediglich ein zusätzlicher Ablenkkörper zwischen dem Rohr und der Hülse anzuordnen ist.

Bei einer bevorzugten Weiterbildung dieser Ausgestaltung ist der Ablenkkörper als ein konzentrisch in der Hülse angeordneter hülsenförmiger Kragen ausgeführt, dessen Durchmesser zur dritten Düsenöffnung hin abnimmt.

Dadurch wird auf konstruktiv besonders einfache Weise eine Verringerung des Strömungsquerschnitts in dem an die dritte Düsenöffnung angrenzenden Kanalabschnitt erzielt.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung der Ausführungsbeispiele und der Zeichnung. Darin zeigen:
- Fig. 1: ein erstes Ausführungsbeispiel einer erfindungsgemäßen Mehrstoffdüse in einem seitlichen Schnitt;
- Fig. 2: die Mehrstoffdüse aus Fig. 1 in Draufsicht.
- Fig. 3: ein zweites Ausführungsbeispiel einer erfindungsgemäßen Mehrstoffdüse in einem seitlichen Schnitt;

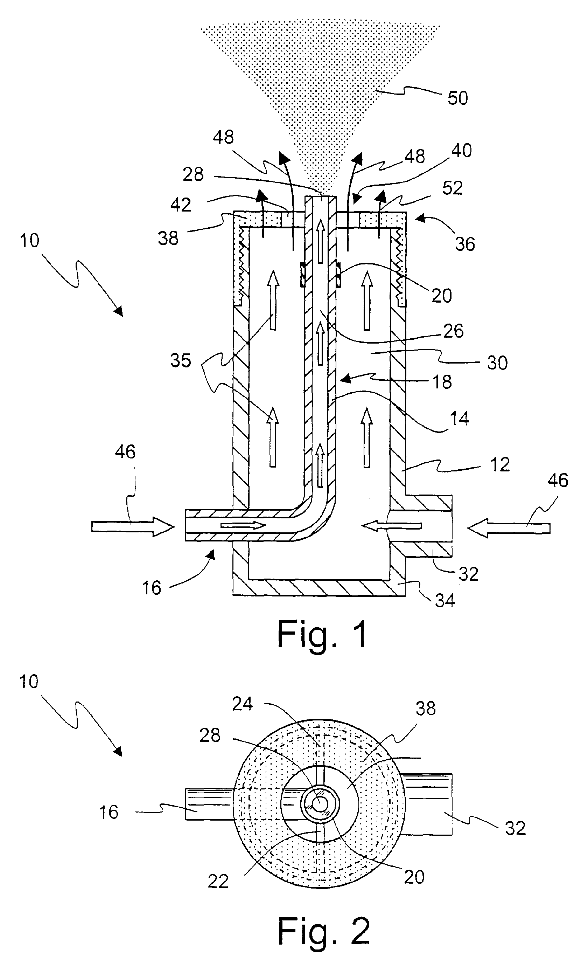

In den Fig. 1 und 2 ist ein erstes Ausführungsbeispiel einer erfindungsgemäßen Mehrstoffdüse in einem seitlichen Schnitt bzw. in Draufsicht dargestellt und insgesamt mit 10 bezeichnet. Die Mehrstoffdüse 10 weist eine Hülse 12 auf, in der ein abgewinkeltes Rohr 14 mit einem kurzen Schenkel 16 und einem langen Schenkel 18 angeordnet ist. Mit dem kurzen Schenkel 16 ist das Rohr 14 in einer Bohrung der Hülse 12 dichtend befestigt. Der lange Schenkel 18 des Rohres 14 verläuft koaxial in der Hülse 12 und ist in der Nähe seiner Mündung von einer Manschette 20 gehalten, die von Stegen 22 und 24 (siehe Fig. 2) in der Hülse 12 abgestützt ist.

Das Innere des Rohres 14 bildet einen ersten Versorgungskanal 26, wobei das Rohrende am langen Schenkel 18 in eine erste Düsenöffnung 28 ausläuft, aus der im ersten Versorgungskanal 26 zugeführte Substanz in den darüberliegenden Freiraum austreten kann. Durch den sich zwischen der Innenseite der Hülse 12 und der Außenseite des Rohres 14 ausbildenden Zwischenraum entsteht ein zweiter Versorgungskanal 30, der einen Anschluß in Form eines Stutzens 32 aufweist. Nach unten hin ist die Hülse 12 durch einen Boden 34 abgeschlossen.

Auf der dem Boden 34 gegenüberliegenden Seite ist eine Kappe 36 aufgeschraubt, die aus einem porösen gasdurchlässigen Material besteht. Die Kappe 36 weist eine axial nach außen weisende Abschlußfläche 38 auf, die mit einem zentralen kreisförmigen Durchbruch 40 versehen ist. Durch die Mitte dieses Durchbruchs 40 verläuft der lange Schenkel 18 des Rohres 14, so daß zwischen dem Rand des Durchbruchs 40 und der Außenseite des Rohres 14 ein umlaufender Spalt 42 verbleibt.

Beim Betrieb der Mehrstoffdüse 10 wird über den kurzen Schenkel 16 des Rohres 14 in Richtung des Pfeiles 44 eine zu zerstäubende Substanz in den ersten Versorgungskanal 26 eingeleitet und darin entlang der Pfeile 45 bis zur ersten Düsenöffnung 28 geleitet, von der aus die Substanz in den darüberliegenden Freiraum tritt. Gleichzeitig wird über den Stutzen 32 in Richtung des Pfeiles 46 Druckluft mit ca. 0,5 bis 4 bar in den zweiten Versorgungskanal 30 eingeleitet. Dort wird die Druckluft entlang der Pfeile 47 bis zur Kappe 36 geführt, von wo aus sie zum größten Teil über den als zweite Düsenöffnung fungierenden Spalt 42 in der durch die Pfeile 48 angedeuteten Richtung austritt. Die mit relativ hoher Geschwindigkeit austretende Druckluft führt dabei zu einem Zerstäuben der aus der Düsenöffnung 28 austretenden Substanz. Auf diese Weise bildet sich ein nur schematisch angedeuteter Nebel 50 über der Mündung der Mehrstoffdüse 10 aus.

Die im zweiten Versorgungskanal 30 zugeführte Luft tritt jedoch nicht nur durch den Spalt 42, sondern auch durch das poröse gasdurchlässige Kappenmaterial der Abschlußfläche 38 in den darüberliegenden Freiraum aus. Dies ist durch die Pfeile 52 angedeutet. Da das poröse gasdurchlässige Material ein Strömungshindernis darstellt, ist die Geschwindigkeit der über das Kappenmaterial austretenden Luft niedriger als die der über den Spalt 42 austretenden Luft. Die aus dem porösen gasdurchlässigen Material bestehende Abschlußfläche 38 der Kappe 36 bildet somit eine dritte Düsenöffnung, durch die über den zweiten Versorgungskanal 30 zugeführte Luft mit reduzierter Geschwindigkeit austreten kann.

Durch Auswechseln der Kappe 36 gegen eine andere Kappe, die aus einem porösen Material mit einem anderen Strömungswiderstand besteht und/oder die einen anderen Durchmesser des Durchbruchs 40 aufweist, können die aus dem Spalt 42 und der Abschlußfläche 38 austretenden Luftströmungen hinsichtlich ihrer Form und ihrer Geschwindigkeit verändert werden, und zwar bei ansonsten unverändertem Druck im zweiten Versorgungskanal 30. Bei einem Kappenmaterial mit großen Poren ist der Strömungswiderstand vergleichsweise gering, so daß die zugeführte Druckluft mit so hoher Geschwindigkeit aus der Abschlußfläche 38 austreten kann, daß sich eine den Nebel 50 zumindest teilweise einhüllende Mantelströmung ausbildet. Je nach Art der Anwendung ist die Ausbildung einer Mantelströmung jedoch nicht unbedingt erforderlich. Es kann dann genügen, eine Kappe mit einem kleineren Porendurchmesser zu wählen, so daß die durch das Kappenmaterial austretende Luft lediglich eine gerade noch ausreichend große Geschwindigkeit hat, um Ablagerungen entgegenzuwirken.

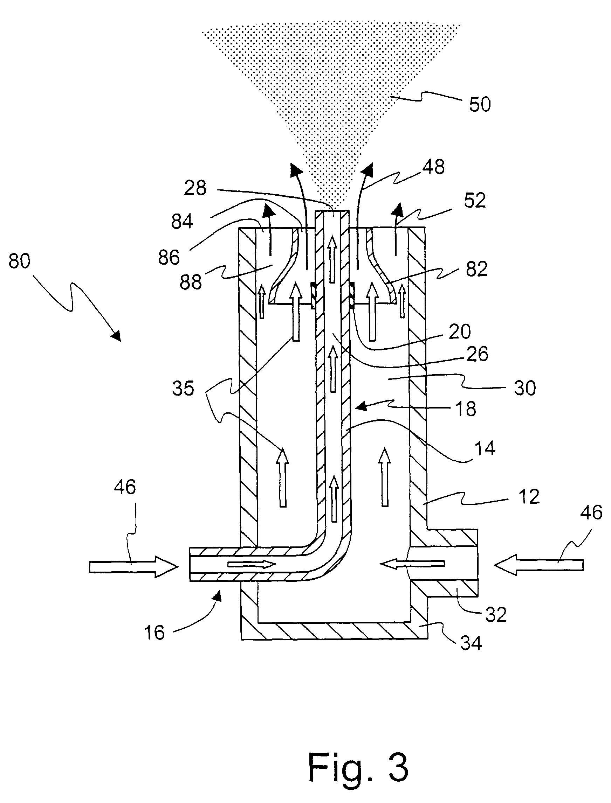

Das in Fig. 3 dargestellte zweite Ausführungsbeispiel einer erfindungsgemäßen Mehrstoffdüse 80 entspricht weitgehend der in Fig. 1 dargestellten Mehrstoffdüse 10, weswegen gleiche Teile mit gleichen Bezugsziffern bezeichnet sind. Im Unterschied zu der in Fig. 1 dargestellten Mehrstoffdüse 10 weist die Mehrstoffdüse 80 jedoch keine aus einem porösen Material bestehende Kappe auf, die die Hülse 12 zur Mündung hin abschließt. Statt dessen ist in die offene Mündung der Hülse 12 ein hülsenförmiger Kragen 82 eingesetzt, dessen Durchmesser sich zur Mündung der Hülse 12 hin verringert. Der Kragen 82 ist dabei in nicht näher dargestellter Weise an der Manschette 20 befestigt.

Die erste Düsenöffnung 28 wird auch bei diesem Ausführungsbeispiel durch die Mündung des ersten Versorgungskanals 26 gebildet. Durch den Kragen 82 werden außerdem an der Mündung der Hülse 12 eine zweite Düsenöffnung 84 sowie eine dritte Düsenöffnung 86 gebildet, durch die im zweiten Versorgungskanals geführte Luft nach außen entweichen kann. Aufgrund des sich zur Mündung der Hülse 12 hin verengenden Kragens 82 wird eine Düsenwirkung erzielt, so daß die Druckluft mit erhöhter Geschwindigkeit austritt. Die Hülse 12 und der Kragen 82 legen außerdem einen Kanalabschnitt 88 fest, der sich von der dritten Düsenöffnung 86 nach unten erstreckt. Da sich der Kragen 82 nach zur Mündung der Hülse 12 hin verjüngt, nimmt der Strömungsquerschnitt in dem Kanalabschnitt 88 zu. Dies führt zu einer verringerten Strömungsgeschwindigkeit in diesem Kanalabschnitt 88 und damit auch zu einer verringerten Austrittsgeschwindigkeit aus der dritten Düsenöffnung 86.

Falls nach dem Abschalten der gesamten Vorrichtung sich absetzende Partikel in die dritte Düsenöffnung 86 eindringen, so sammeln sich diese in dem Kanalabschnitt 88. Sie lassen sich von dort vergleichsweise einfach entfernen, ohne daß dazu die Mehrstoffdüse 80 zerlegt werden muß.

## Patentansprüche

1. Mehrstoffdüse zum Zerstäuben einer Substanz, insbesondere für eine Vorrichtung zum Beschichten, Granulieren, Pelletieren oder Dragieren eines Gutes, mit einer ersten Düsenöffnung (28), die von einem ersten Versorgungskanal (26) zur Zuführung der Substanz gespeist wird, mit einer sich um die erste Düsenöffnung (28) herum erstreckenden zweiten - Düsenöffnung (42; 84), die von einem zweiten Versorgungskanal (30) zur Zuführung eines Gases gespeist wird, und mit einer sich um die zweite Düsenöffnung (42; 84) herum erstreckenden dritten Düsenöffnung (38; 86), **dadurch gekennzeichnet, daß** die dritte Düsenöffnung (38; 86) von dem zweiten Versorgungskanal (30) gespeist wird und daß die Mehrstoffdüse (10; 80) Mittel (38; 88) aufweist, die die Geschwindigkeit des aus der dritten Düsenöffnung (38; 86) austretendes Gases gegenüber der Geschwindigkeit des aus der zweiten Düsenöffnung (42; 84) austretenden Gases verringern.

2. Mehrstoffdüse nach Anspruch 1, **dadurch gekennzeichnet, daß** die Mittel zur Verringerung der Geschwindigkeit als ein die zweite Düsenöffnung (42) umgebendes mechanisches Strömungshindernis (38) ausgeführt sind.

3. Mehrstoffdüse nach Anspruch 2, **dadurch gekennzeichnet, daß** der zweite Versorgungskanal (30) durch eine Kappe (36) abgeschlossen ist, in der die zweite Düsenöffnung (42) ausgespart ist und die das die dritte Düsenöffnung bildende mechanische Strömungshindernis (38) trägt.

4. Mehrstoffdüse nach Anspruch 3, **dadurch gekennzeichnet, daß** die Kappe (36) lösbar, insbesondere aufschraubbar, an der Hülse (12) befestigt ist.

5. Mehrstoffdüse nach einem der Ansprüche 2 bis 4, **dadurch gekennzeichnet, daß** das mechanische Strömungshindernis (38) aus einem porösen gasdurchlässigen Material besteht.

6. Mehrstoffdüse nach einem der vorhergehenden Ansprüche, **dadurch gekennzeichnet, daß** der erste Versorgungskanal (26) als ein konzentrisch in einer Hülse (12) angeordnetes Rohr (14) ausgeführt ist, dessen eines Ende die erste Düsenöffnung (28) bildet, und daß der zweite Versorgungskanal (30) durch einen Zwischenraum gebildet wird, der zwischen der Hülse (12) und dem Rohr (14) verbleibt.

7. Mehrstoffdüse nach Anspruch 1, **dadurch gekennzeichnet, daß** die Mittel zur Verringerung der Geschwindigkeit durch einen an die dritte Düsenöffnung (86) angrenzenden Kanalabschnitt (88) gebildet sind, dessen Strömungsquerschnitt sich zur dritten Düsenöffnung (86) hin vergrößert.

8. Mehrstoffdüse nach den Ansprüche 6 und 7, **dadurch gekennzeichnet, daß** der Kanalabschnitt (88) durch die Hülse (12) und einem in dem Zwischenraum angeordneten Ablenkkörper (82) gebildet wird, der die zweite Düsenöffnung (84) von der dritten Düsenöffnung (86) trennt.

9. Mehrstoffdüse nach Anspruch 8, **dadurch gekennzeichnet, daß** der Ablenkkörper als ein konzentrisch in der Hülse (12) angeordneter hülsenförmiger Kragen (82) ausgeführt ist, dessen Durchmesser zur dritten Düsenöffnung (86) hin abnimmt.
